# EUROPEAN PATENT APPLICATION

(11) **EP 2 963 619 A1**
(43) Date of publication of application: **06.01.2016**
(21) Application number: 14174912.7
(22) Date of filing: 30.06.2014
(51) Int. Cl.: G07C 5/00, G07C 5/08

(54) **Data collection apparatus, data collection system and method for data collection in vehicles**

(71) Applicant: Airbus Operations GmbH, 21129 Hamburg (DE); Airbus Operations (S.A.S.), 31060 Toulouse Cedex 9 (FR)
(72) Inventor: Schalke, Oliver, 20149 Hamburg (DE); Forgeau, Benjamin, 22880 Wedel (DE); Barberet, Vincent, 31300 Toulouse (FR); Beltrand, Francois, 31270 Villeneuve Tolosane (FR)
(74) Representative: Isarpatent

(57) **Abstract**

The present invention pertains to a data collection apparatus, including a data input interface which is configured to receive electronic data items from a plurality of electronic application components, a data collection processor coupled to the data input interface, a data storage coupled to the data collection processor and configured to store electronic data items received by the data collection processor as electronic report data, a trigger module coupled to the data collection processor and configured to trigger the read-out of selected electronic report data by the data collection processor from the data storage, at least one communication module coupled to the data collection processor, and a storage management unit coupled to the data collection processor and configured to select one or more of the communication modules for the data collection processor to output the read out electronic report data to a communication module of a remote station.

## Description

### TECHNICAL FIELD

The present invention relates to a data collection apparatus, particularly for use vehicles such as aircraft or spacecraft, a data collection system, an airborne vehicle comprising a data collection apparatus and a method for data collection in vehicles, particular in airborne vehicles.

### TECHNICAL BACKGROUND

In contemporary vehicles such as aircraft or spacecraft there are a multitude of electronic or electric applications which generate data items, for example measurement values of physical parameters, meter readings of electronic equipment or text-bound data blocks. This kind of data needs to be collected in the vehicle during use and made available to central maintenance and control stations remotely from the vehicle. For example, airborne vehicles have onboard applications that generate data during flight which need to be transmitted to airline back offices at the ground for automated processing.

The document WO 2007/064655 A1 discloses an open data network of an aircraft that facilitates communication between applications related to operation of the vehicle. The document US 2007/0118274 A1 discloses a telematics application protocol which provides a communication framework for applications which allow a user to communicate with a vehicle's onboard processor. The document EP 2 176 963 B1 discloses a scheduled synchronous data transmission scheme for mobile platforms. The document EP 1 798 872 B1 discloses a multi-network aircraft communication system and a method for communicating data on board of an aircraft.

### SUMMARY OF THE DISCLOSURE

One object of the invention is thus to provide solutions for a centralized collection of data irrespective of the data format or the data source. Key to the present invention is the ability to centrally request stored data and/or reports from a plurality of electronic application components.

The centralized data collection apparatus may then be able to structure the data format and collimate the data from different data sources into structured report data. The data collection apparatus includes a data storage medium which serves as temporary report data repository from which report data may be selectively retrieved and sent out to remote stations on demand or automatically and periodically. The output of report data is performed by one of a plurality of data transmission means which may be selected depending on the circumstances, the report data type and/or the type of demand.

This object is achieved by a data collection apparatus having the features of claim 1, a data distribution system having the features of claim 11, an airborne vehicle having the features of claim 12, and a method for data collection having the features of claim 13.

A first aspect of the disclosure pertains to a data collection apparatus, comprising a data input interface which is configured to receive electronic data items from a plurality of electronic application components, a data collection processor coupled to the data input interface, a data storage coupled to the data collection processor and configured to store electronic data items received by the data collection processor as electronic report data, a trigger module coupled to the data collection processor and configured to trigger the read-out of selected electronic report data by the data collection processor from the data storage, at least one communication module coupled to the data collection processor, and a storage management unit coupled to the data collection processor and configured to select one or more of the communication modules for the data collection processor to output the read out electronic report data to a communication module of a remote station.

According to a second aspect of the disclosure, a data collection system may comprise a data collection apparatus according to the first aspect of the disclosure, a plurality of electronic application components coupled to the data input interface of the data collection apparatus and configured to output electronic data items to the data input interface of the data collection apparatus, and a remote station comprising one or more communication modules which are configured to communicate with respective ones of the communication modules of the data collection apparatus.

According to a third aspect of the disclosure, a method for data collection comprises generating electronic data items by a plurality of electronic application components, receiving the generated electronic data items via a data input interface of a data collection apparatus, storing the received electronic data items in a data storage of the data collection apparatus as electronic report data, reading out selected electronic report data from the data storage, selecting one or more of a plurality of communication modules of the data collection apparatus, and outputting the read out electronic report data to a communication module of a remote station via the selected communication modules.

According to a fourth aspect of the disclosure, an airborne vehicle may comprise a data collection system in line with the second aspect of the disclosure.

According to an embodiment of the data collection apparatus, the data collection apparatus may comprise a profile storage module coupled to the data collection processor and configured to store one or more communication profiles which adapt the behaviour of the data collection processor to read out report data and to communicate the read out report data to the remote station.

According to a further embodiment of the data collection apparatus, the data collection apparatus may comprise a human-machine interface coupled to the data collection processor and configured to receive input of a human user of the data collection apparatus.

According to a further embodiment of the data collection apparatus, the data collection apparatus may comprise a plurality of communication modules, and the communication module may be selected from the group of a satellite communication module, a wirebound communication module, and a wireless communication module.

According to a further embodiment of the data collection apparatus, the data storage may be removably installed in a data storage receptacle of the data collection apparatus.

According to a further embodiment of the data collection apparatus, the data collection processor may comprise a data assembly module configured to assemble consecutively received electronic data items from one of the electronic application components to concatenated report data.

According to a further embodiment of the data collection apparatus, the data collection processor may comprise a storage area selection module configured to select one or more segregated storage areas of the data storage for storing specific report data.

According to a further embodiment of the data collection apparatus, the data collection processor may comprise a data encryption module configured to encrypt and decrypt electronic report data stored in the data storage.

According to a further embodiment of the data collection apparatus, the data collection processor may comprise a data compression module configured to compress and decompress electronic report data stored in the data storage.

According to a further embodiment of the data collection apparatus, the data collection processor may further comprise a storage management unit configured to selectively erase and/or overwrite electronic report data stored in the data storage with newly received electronic data items from the electronic application components depending on a predetermined priority profile for the electronic application components.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a data collection system according to an embodiment.
Fig. 2 schematically illustrates a data collection processor for the data collection system of Fig. 1 according to an embodiment.
Fig. 3 schematically illustrates a data storage for the data collection system of Fig. 1 according to an embodiment.
Fig. 4 schematically illustrates a remote station for the data collection system of Fig. 1 according to an embodiment.
Fig. 5 schematically illustrates an airborne vehicle having a data collection system according to another embodiment.
Fig. 6 schematically illustrates a method for data collection according to another embodiment.

### DETAILED DESCRIPTION OF EMBODIMENTS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

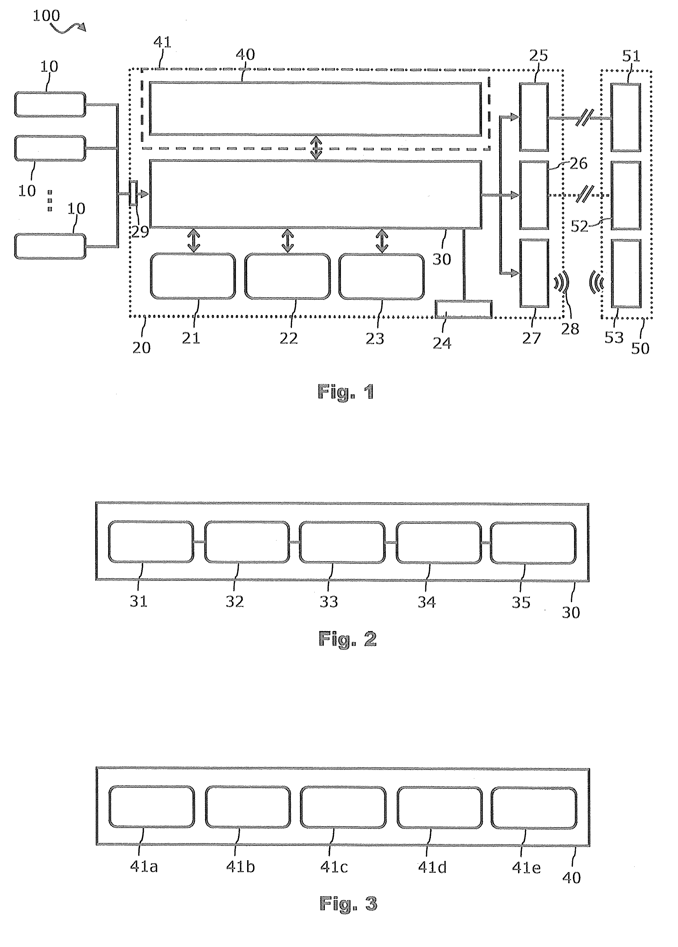

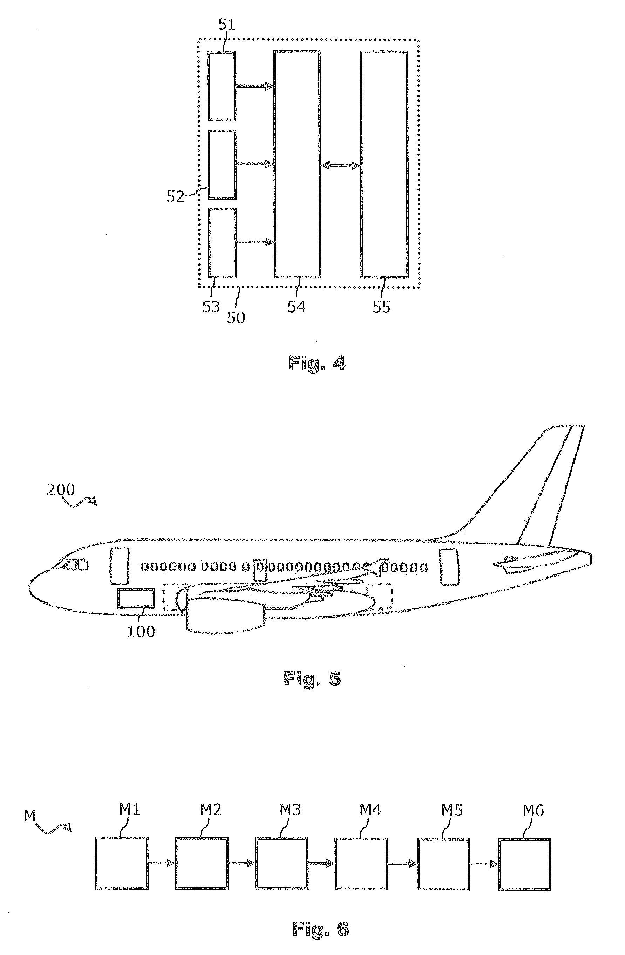

Fig. 1 shows a schematic illustration of a data collection system 100, for example in use in a vehicle such as an airborne vehicle as exemplarily depicted with the reference numeral 200 in Fig. 5. However, the data collection system 100 may be employed in any kind of decentralized environment such as ships, cars, robots, remote industrial facilities or other movable or non-movable systems. The data collection system 100 employs a data collection apparatus 20 as onboard component of the vehicle and a remote station 50 located remotely from the system with the data collection apparatus 20. The remote station 50 may for example be a ground station, maintenance centre or other stationary facility of an operator of the data collection system 100. For use in an airborne vehicle 200, the remote station 50 may for example be a server of an airline back office operating the airborne vehicle 200.

The data collection system 100 further comprises one or more electronic application components 10 such as sensors, software applications, embedded applications, system components, or any other kind of independently operating component. The number of electronic application components 10 is only exemplarily depicted as three in Fig. 1, however, any other number of electronic application components 10 may be equally applicable as well, depending on the desired system requirements. The electronic application components 10 are configured to emit electronic data sets (hereinafter generally and without limiting the generality referred to as "report data") in digital format.

The electronic application components 10 are connected to a data input interface 29 of a data collection apparatus 20. At the data input interface 29 electronic data items from the plurality of electronic application components 10 may be received and input to a data collection processor 30 coupled to the data input interface 29 for processing of the various electronic data items. The data collection processor 30 is coupled to a data storage 40 and is configured to have read and write access to the data storage in order to be able to store electronic data items received by the data collection processor 30 as electronic report data. Each electronic data item received by the data collection processor 30 may be assigned to one or more of specific reports. An exemplary setup of the data collection processor 30 is schematically illustrated in Fig. 2.

The data storage 40 may be subdivided into physically and/or virtually disjunct storage areas 41a, 41b, 41c, 41d and 41e as exemplarily illustrated in Fig. 3. The number of disjunct or segregated storage areas 41a, 41b, 41c, 41d and 41e is exemplarily shown as five in Fig. 3, however, any other number of storage areas in the data storage 40 may be equally possible as well, depending on the conditions and requirements in the data collection system 100. The data storage 40 may be removably installed in a data storage receptacle 41 of the data collection apparatus 20. The data storage 40 may for example be a hard disk, a USB stick, a flash memory card or any other suitable data storage medium.

The manual transport of data to the remote station 50 may be effected by a user such as a technician or a flight crew member. The procedure for manual transport may involve connecting the portable data storage medium 40 into the data storage receptacle 41, selecting the report data to be transferred manually, activating the storage of the report data onto the data storage medium 40, disconnecting the portable data storage medium 40 from the data collection apparatus 20, connecting the data storage medium 40 to the remote station 50 and transferring the report data selected by the user from the data storage medium 40 to a storage device of the remote station 50.

Report data may be stored in different segregated storage areas 41a, 41b, 41c, 41d and 41e such that storing report data in one of the storage areas does not affect the report data stored in different storage areas. The data collection processor 30 may comprise a storage area selection module 32 which is configured to select one or more segregated storage areas 41a, 41b, 41c, 41d, and 41e of the data storage 40 for storing specific report data. There may, for example, be one dedicated storage area 41a, 41b, 41c, 41d, and 41e of the data storage 40 per report type or per group of report types. The available capacity of each storage area 41a, 41b, 41c, 41d, and 41e of the data storage 40 and its allocation with regard to report type may be pre-configured in a storage area profile of the data collection processor 30.

Some reports may be generated incrementally by receiving subsequent electronic data items at the data input interface 29. To that end, the data collection processor 30 may comprise a data assembly module 31 that is configured to assemble consecutively received electronic data items from one of the electronic application components 10 to concatenated report data, i.e. an incrementally generated report. The data assembly module 31 may the different incoming data items dynamically in order to form the complete report. In case the report needs to be retrieved before the report is complete, i.e. before the last electronic data item has been received, the related report may be retrieved partially containing the data items having been retrieved so far, with a respective indication that the report is only a partial one.

The data collection apparatus 20 may include a trigger module 22 which is coupled to the data collection processor 30 and which is configured to trigger the read-out of selected electronic report data by the data collection processor 30 from the data storage 40. Once a complete report has been stored in the data storage 40, the trigger module 22 may trigger the retrieval of such a report automatically depending on a pre-configured trigger condition with respect to timing, retrieval frequency and/or external trigger events.

The data collection apparatus 20 may further include at least one communication module, for example a satellite communication module 25, a wirebound communication module 26, and a wireless communication module 27, which are coupled to the data collection processor 30. A storage management unit 23 coupled to the data collection processor 30 may be provided in order to select one or more of the communication modules 25, 26, and 27 for the data collection processor 30 to output the read out electronic report data to a respective counterpart communication module 51, 52, or 53 of a remote station 50. For example, the wireless communication module 27 may communicate with a wireless ) communication module 53 of the remote station via wireless communication 28.

The data collection apparatus 20 may further comprise a profile storage module 21 which is coupled to the data collection processor 30. The profile storage module 21 may be configured to store one or more communication profiles which adapt the behaviour of the data collection processor 30 to read out report data and to communicate the read out report data to the remote station 50.

The data collection apparatus 20 may further comprise a human-machine interface 24 coupled to the data collection processor 30, whereby a user is able to interact with the data collection apparatus 20 onboard of the vehicle. The human-machine interface 24 receives input as to list all reports currently stored on the data storage 40, select one or more of the reports, trigger any combination of the transfer mechanisms of report data to the data storage 40 and/or the remote station 50, monitor the status of ongoing transfers of report data and/or change configuration settings associated with the storing, retrieving and/or transferring of report data.

The data collection processor 30 may further comprises a data encryption module 33 which is used configured to encrypt and decrypt electronic report data stored in the data storage 40, for example to prevent eavesdropping. Additionally or alternatively, the data collection processor 30 may further comprise a data compression module 34 configured to compress and decompress electronic report data stored in the data storage 40, for example to adapt the data collection apparatus 20 and its capabilities to the limited storage resources of the data storage 40.

The data collection processor 30 may further comprise a storage management unit 35 which is configured to selectively erase and/or overwrite electronic report data stored in the data storage 40 with newly received electronic data items from the electronic application components 10 depending on a predetermined priority profile for the electronic application components 10. In each segregated data storage area, if the remaining storage capacity is not large enough to receive and store a newly generated or updated report, one or more of storage selection criteria may be applied by the storage management unit 35: For example, reports having been previously stored may be judged upon their priority as to whether they are overwritten or pushed out by newly generated reports. Alternatively, incoming reports may be rejected due to their minor importance or priority over already stored reports.

In addition, in order to keep the overall number of reports manageable, configurable rule sets regarding the clean up of storage areas may be kept and executed in the storage management unit 35: For example, all reports that have been generated on demand by a user may be deleted upon the user leaving the vehicle. The maximum number of reports may be limited to a configurable value. Further, the duration during which a report is kept in storage may be set to a maximum value, for example as an absolute value in minutes or hours or as a relative vehicle with respect to the operational state of the vehicle, such as completed flight routes of an aircraft.

Fig. 4 schematically illustrates a remote station 50 of the data collection system 100 in Fig. 1 in greater detail. The remote station 50 may comprise a plurality of communication modules 51, 52, 53, for example a satellite communication module 51, a wirebound communication module 52 and a wireless communication module 53. The communication modules 51, 52, 53 are coupled to a remote data processing module 54 which in turn is able to receive incoming report data over one or more of the communication modules 51, 52, 53 and store the received report data selectively in a remote data storage 55. The stored report data in the remote station 50 may be accessed via a (not explicitly shown) human-machine interface of the remote station 50.

For each electronic transmission of report data, the data collection system 100 and specifically the data collection processor 30 may selectively apply a preconfigurable ruleset as to which type of communication module may be preferred. This selection may for example depend on the operational state of the vehicle in which the data collection system 100 is installed, the available bandwidth over each communication medium at that time and/or the desired speed of data transmission. Moreover, the data collection processor 30 may employ a least-cost routing algorithm to determine the lowest data transmission cost with regard to money, time and effort involved in the data transmission process. During the electronic transmission, report data may be sent sequentially according to the priorities determined in the transmission profiles. In the case that the transmission of a report has not been completed after a certain duration which may be pre-configured in a profile, the data collection processor 30 may terminate and/or reschedule the data transmission and cancel the respective triggering request.

Fig. 6 exemplarily illustrates a method M for data collection in a vehicle, for example in an airborne vehicle such as the airborne vehicle 200 of Fig. 5, in particular using a data collection system 100 as illustrated in conjunction with Figs. 1 to 4. The method M may comprise at M1 generating electronic data items by a plurality of electronic application components 10. At M2, the generated electronic data items may be received via a data input interface 29 of a data collection apparatus 20 and stored, at M3 in a data storage 40 of the data collection apparatus 20 as electronic report data. Selected electronic report data may be read out from the data storage 40 at M4, and one or more of a plurality of communication modules 25, 26 and 27 of the data collection apparatus 20 may be selected at M5 to output the read out electronic report data to a communication module 51, 52, or 53 of a remote station 50 via the selected communication modules 25, 26, 27 at M6.

With the data collection apparatus, the data collection system and the method for data collection, it may be advantageously possible to automatically collect and store electronic data sets as reports which are generated by system and/or software applications onboard of a vehicle. The centralized onboard management of the storage of the reports allows for the generated electronic data sets to be stored in different security domains, depending on the type of system and/or software applications.

The data collection apparatus facilitates the manually triggered and/or automatically performed transfer of report data to a remote or ground station by means of telecommunication and/or manual transport on a portable data storage device. The kind, volume and behaviour of the data transfer may be conveniently adapted to the needs of the user and the desired report type, for example by means of preconfigurable transfer profiles and customizable data sets included in the onboard data collection apparatus.

The report type may be defined as a combination of the type of data contained in the report and the way the data has been generated and received. For example, reports generated automatically by an embedded application in the data collection system may be treated differently in terms of communication to a remote station than reports generated manually on request of a user via input at a human-machine interface or transferred remotely to the data collection apparatus.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 10: Electronic application component
- 20: Data collection apparatus
- 21: Profile storage module
- 22: Trigger module
- 23: Data transmission selector
- 24: Human-machine interface
- 25: Communication module
- 26: Communication module
- 27: Wireless communication module
- 28: Wireless communication
- 29: Data input interface
- 30: Data collection processor
- 31: Data assembly module
- 32: Storage area selection module
- 33: Data encryption module
- 34: Data compression module
- 35: Storage management unit
- 40: Data storage
- 41: Storage component receptacle
- 41a: Storage area
- 41b: Storage area
- 41c: Storage area
- 41d: Storage area
- 41e: Storage area
- 50: Remote station
- 51: Communication module
- 52: Communication module
- 53: Wireless communication module
- 54: Remote data processing module
- 55: Remote data storage
- 100: Data collection system
- 200: Aircraft
- M: Method
- M1: Method step
- M2: Method step
- M3: Method step
- M4: Method step
- M5: Method step
- M6: Method step

## Claims

1. Data collection apparatus (20), comprising:
a data input interface (29) which is configured to receive electronic data items from a plurality of electronic application components (10);
a data collection processor (30) coupled to the data input interface (29);
a data storage (40) coupled to the data collection processor (30) and configured to store electronic data items received by the data collection processor (30) as electronic report data;
a trigger module (22) coupled to the data collection processor (30) and configured to trigger the read-out of selected electronic report data by the data collection processor (30) from the data storage (40);
at least one communication module (25; 26; 27) coupled to the data collection processor (30); and
a storage management unit (23) coupled to the data collection processor (30) and configured to select one or more of the communication modules (25; 26; 27) for the data collection processor (30) to output the read out electronic report data to a communication module (51; 52; 53) of a remote station (50).

2. Data collection apparatus (20) according to claim 1, further comprising:
a profile storage module (21) coupled to the data collection processor (30) and configured to store one or more communication profiles which adapt the behaviour of the data collection processor (30) to read out report data and to communicate the read out report data to the remote station (50).

3. Data collection apparatus (20) according to one of the claims 1 and 2, further comprising:
a human-machine interface (24) coupled to the data collection processor (30) and configured to receive input of a human user of the data collection apparatus (20).

4. Data collection apparatus (20) according to one of the claims 1 to 3, wherein the data collection apparatus (20) comprises a plurality of communication modules (25; 26; 27), and wherein the communication modules (25; 26; 27) are selected from the group of a satellite communication module (25), a wirebound communication module, and a wireless communication module (27).

5. Data collection apparatus (20) according to one of the claims 1 to 4, wherein the data storage (40) is removably installed in a data storage receptacle (41) of the data collection apparatus (20).

6. Data collection apparatus (20) according to one of the claims 1 to 5, wherein the data collection processor (30) comprises a data assembly module (31) configured to assemble consecutively received electronic data items from one of the electronic application components (10) to concatenated report data.

7. Data collection apparatus (20) according to one of the claims 1 to 6, wherein the data collection processor (30) comprises a storage area selection module (32) configured to select one or more segregated storage areas (41a; 41b; 41c; 41d; 41e) of the data storage (40) for storing specific report data.

8. Data collection apparatus (20) according to one of the claims 1 to 7, wherein the data collection processor (30) comprises a data encryption module (33) configured to encrypt and decrypt electronic report data stored in the data storage (40).

9. Data collection apparatus (20) according to one of the claims 1 to 8, wherein the data collection processor (30) further comprises a data compression module (34) configured to compress and decompress electronic report data stored in the data storage (40).

10. Data collection apparatus (20) according to one of the claims 1 to 9, wherein the data collection processor (30) further comprises a storage management unit (35) configured to selectively erase and/or overwrite electronic report data stored in the data storage (40) with newly received electronic data items from the electronic application components (10) depending on a predetermined priority profile for the electronic application components (10).

11. Data collection system (100), comprising:
a data collection apparatus (20) according to one of the claims 1 to 10;
a plurality of electronic application components (10) coupled to the data input interface (29) of the data collection apparatus (20) and configured to output electronic data items to the data input interface (29) of the data collection apparatus (20); and
a remote station (50) comprising one or more communication modules (51; 52; 53) which are configured to communicate with respective ones of the communication modules (25; 26; 27) of the data collection apparatus (20).

12. Airborne vehicle (200), comprising a data collection system (100) according to claim 11.

13. Method (M) for data collection, the method comprising:
generating (M1) electronic data items by a plurality of electronic application components (10);
receiving (M2) the generated electronic data items via a data input interface (29) of a data collection apparatus (20);
storing (M3) the received electronic data items in a data storage (40) of the data collection apparatus (20) as electronic report data;
reading out (M4) selected electronic report data from the data storage (40);
selecting (M5) one or more of a plurality of communication modules (25; 26; 27) of the data collection apparatus (20); and
outputting (M6) the read out electronic report data to a communication module (51; 52; 53) of a remote station (50) via the selected communication modules (25; 26; 27).
